# EUROPEAN PATENT SPECIFICATION

(11) **EP 3 332 109 B1**
(45) Date of publication and mention of the grant of the patent: **18.03.2020**
(21) Application number: 16798844.3
(22) Date of filing: 02.08.2016
(51) Int. Cl.: B60K 11/02, F02M 21/02, B60K 15/03, F17C 11/00

(54) **AN ADSORBED NATURAL GAS SYSTEM FOR VEHICLES**
ADSORBIERTES ERDGASSYSTEM FÜR FAHRZEUGE
SYSTÈME DE GAZ NATUREL ADSORBÉ POUR VÉHICULES

(30) Priority: 03.08.2015 TR 201509592
(43) Date of publication of application: 13.06.2018
(73) Proprietor: Tofas Turk Otomobil Fabrikasi Anonim Sirketi, Bursa (TR)
(72) Inventor: OZKAN, Cengiz, Bursa (TR); SEN, Emre, Bursa (TR); GUDU, Turker, Bursa (TR); SAYAR, Asli, Bursa (TR); CANBAK, Onur, Gebze/Kocaeli (TR); SENER, Tansel, Osmangazi, Bursa (TR)
(74) Representative: Dericioglu, E. Korhan
(86) International application number: PCT/TR2016/050255
(87) International publication number: WO 2017/023224

(56) References cited:
- WO-A1-2009/071436
- WO-A1-2014/152815
- WO-A1-2015/022616
- WO-A1-2015/048489

## Description

### Field of the Invention

The present invention relates to an adsorbed natural gas system for vehicles which aims to store, fill and use natural gas for natural-gas-driven-systems in motor vehicles.

### Background of the Invention

In automotive sector, many studies have been conducted since recent past in order to utilize fuels alternative to petrol. Natural gas, which is one of these alternative fuels, is the cleanest fuel and comprises the least carbon and the most hydrogen among the fossil fuels. Moreover, upon discovery of new natural gas sites, development of the natural gas vehicles, which are environmentally friendly, economic and reliable, has increased incrementally in the recent years. As of year 2014, there are more than 18 million natural gas vehicles and more than 16.5 million of this figure is comprised of light commercial vehicles and automobiles.

Today, various methods are being used for storage and usage of natural gas in vehicles. There are as follows:
Compressed Natural Gas (CNG): CNG method comprises storing the natural gas upon pressurizing it up to approximately 200 bars in ambient temperature and feeding it into the vehicle.
Liquefied Natural Gas (LNG): LNG method includes liquefying the natural gas at a temperature of -163°C and storing it in cryogenic tanks and feeding it to the vehicle.

Both storage methods have advantages and disadvantages over each other, and the storage method selected in the vehicle differ according to area of use.

There is one more different natural gas storage method which has not been industrialized yet, while development studies thereon continue increasingly. In the said method, natural gas molecules are compressed to approximately 35 bar pressure and impregnated at ambient temperature on porous structures of carbon derivative or metal organic hybrid materials. Since storage can be performed at a lower pressure with this method, which is called Adsorbed Natural Gas (ANG) technology, tank costs can be reduced and also it provides economic advantage in understructure costs of natural gas filling stations. Since storage at low pressure eliminates the requirement of producing the tanks in cylindrical form; producing the ANG tanks in different forms provides the advantage of flexibility in terms of storage location in the vehicle.

Upon integration of ANG system to the vehicle, additional modifications are needed on the vehicle in heating/cooling system, fuel system and control system.

United States patent document no. US20140026868, an application known in the state of the art, discloses a hybrid vehicle which stored natural gas in adsorbed form. The invention describes conversion of a compressed natural gas tank to an adsorbed natural gas tank.

United States Patent document no. US20150001101, another application known in the state of the art, discloses a natural gas tank storage system for vehicles. The invention includes a guard tank in addition to the storage tank. The invention comprises a filter containing a heating mechanism and a valve which controls the pressure within the guard tank and storage tank. Thus, storing, filling and discharging natural gas are improved.

Chinese patent document no. CN103133864, another application known in the state of the art, discloses a fuel system which uses adsorbed natural gas and liquefied natural gas systems together. The invention includes an adsorbed natural gas tank and a liquefied natural gas tank. These systems are connected to each other in parallel and thus the whole system provides advantages of both of the systems. Hence, it enhances natural gas usage efficiency.

Document no WO2009071436 A1 relates to a method for storing gaseous hydrocarbons in a sorption reservoir. The temperature of the stored hydrocarbons when the sorption reservoir is full is lower than room temperature and higher than the evaporation temperature of the hydrocarbon. Said invention also discloses a heating element within the gas reservoir. Said heating element is an electric heater which is controlled by a control system.

WO2014/152815 discloses an adsorbed natural gas tank with a heating/cooling system using components of engine's cooling system and the vehicle's air conditioning system.

### Summary of the Invention

The objective of the present invention is to provide an adsorbed natural gas system which enables natural gas storage, filling and usage processes in motor vehicles running on natural gas.

Another objective of the present invention is to provide an adsorbed natural gas system which stores natural gas in the form of adsorbed natural gas.

A further objective of the present invention is to provide an adsorbed natural gas system which is an adsorbed natural gas system that works together with compressed natural gas system.

### Detailed Description of the Invention

The accompanying figures regarding the adsorbed natural gas system, which enables the natural gas systems to work together with ANG (Adsorbed Natural Gas) storage, are as follows:

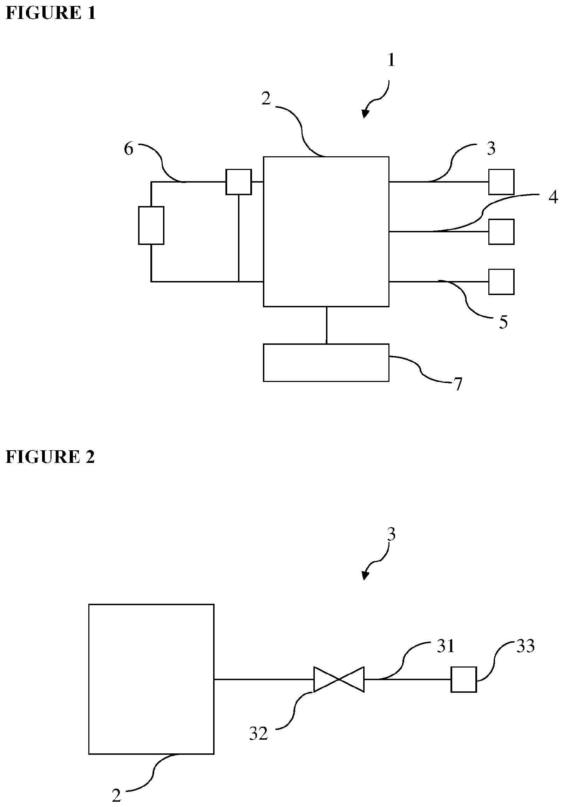

**Figure 1** is a schematic view of the adsorbed natural gas system for natural gas vehicles.
**Figure 2** is a schematic view of the natural gas vacuum circuit.

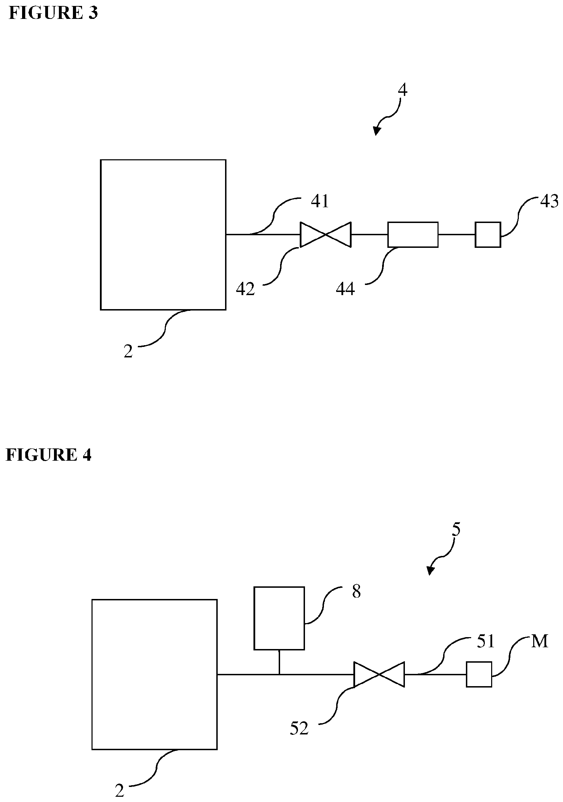

**Figure 3** is a schematic view of the natural gas filling circuit.
**Figure 4** is a schematic view of the natural gas usage circuit.

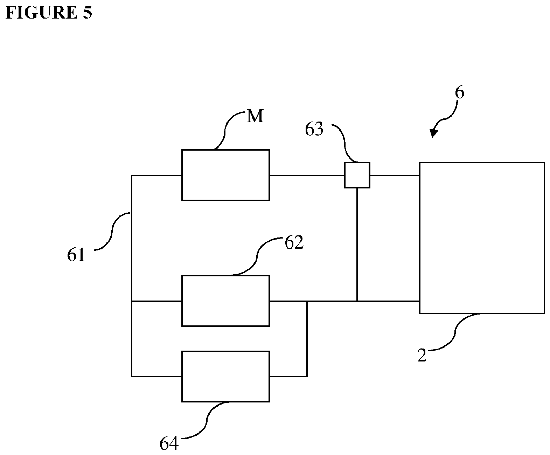

**Figure 5** is a schematic view of the water circuit.

The components shown in the figures are each given reference numbers as follows:
1. Adsorbed natural gas system
2. Adsorbed natural gas tank
3. Natural gas vacuum circuit
   31. Vacuum line
   32. Vacuum valve
   33. Vacuum opening
4. Natural gas filling circuit
   41. Filling line
   42. Filling valve
   43. Filling opening
   44. Regulator
5. Natural gas usage circuit
   51. ANG line
   52. Usage valve
6. Water circuit
   61. Water line
   62. Radiator
   63. Three-way valve
   64. Air conditioning system
7. Control unit
8. Compressed natural gas tank
M. Engine

The invention relates to an adsorbed natural gas system according to claim 1.

The adsorbed natural gas tank (2) is in the form of a tank which stores natural gas by means of the porous materials provided therein. Since the pressure of the natural gas stored therein is not as high as it is in the compressed natural gas technology, it is possible to produce and place the tank in the vehicle in more suitable forms.

In adsorbed natural gas storage systems, it is important to empty the adsorbed natural gas tank (2) by vacuum operation prior to natural gas filling operation at the natural gas stations. Thus, it is enabled to completely fill the adsorbed natural gas tank (2) with gas and to attain complete adsorption. The natural gas vacuum circuit (3) comprises
- at least one vacuum line (31) through which the natural gas is vacuumed from the adsorbed natural gas tank (2),
- a vacuum valve (32) which controls passage of the natural gas through the vacuum line (31),
- at least one vacuum opening (33) which enables connection of the vacuum line (31) to the vacuum pump.

During the vacuum operation, the vacuum opening (33) is connected to the vacuum pump and the vacuum pump is operated. The pressure value of the vacuum produced by the vacuum pump is monitored by the sensors provided in the vacuum line (31). When the pressure value measured by the sensor reaches a predetermined value, the vacuum valve (32) is opened and vacuum operation is started. When vacuum operation is completed, in other words, when the pressure value measured by the sensor reaches a predetermined value, the vacuum valve (32) is closed and vacuum operation is terminated.

In adsorbed natural gas storage systems, natural gas filling operation at the natural gas stations is performed according to compressed natural gas storages. The natural gas filling circuit (4) comprises
- at least one filling line (41) through which the natural gas is delivered to the adsorbed natural gas tank (2),
- a filling valve (42) which controls passage of the natural gas through the filling line (41),
- at least one filling opening (43) which enables connection of the filling line (41) to the natural gas station,
- a regulator (44) which adjusts the pressure of the natural gas received from the natural gas station to a pressure suitable to the adsorbed natural gas tank (2).

During the filling operation, the filling opening (43) is connected to the natural gas station and the filling operation is started. The pressure of the natural gas coming from the natural gas station is monitored by the sensors provided in the filling line (41). When the pressure value measured by the sensor reaches a predetermined value, the filling valve (42) is opened and the passage of the gas is started. When filling operation is completed, in other words, when the pressure value measured by the sensor reaches a predetermined value, the filling valve (42) is closed and filling operation is terminated.

Delivery of the stored natural gas to the engine in order to be used as fuel is performed by the natural gas usage circuit (5). The natural gas usage circuit (5) comprises
- at least one ANG line (51) through which the natural gas is delivered from the adsorbed natural gas tank (2) to the engine,
- a usage valve (52) which controls passage of the natural gas through the ANG line (51).

Temperature of the adsorbed natural gas tank (2) is required to be controlled during usage. This process is carried out by a water circuit (6) operating in integration with the engine cooling circuit of the vehicle. The water circuit (6) comprises
- at least one water line (61) through which the engine coolant travels,
- at least one radiator (62) through which the coolant heated by the engine's (M) temperature discharges the heat out of the vehicle,
- at least one three way valve (63) which, when the adsorbed natural gas tank (2) is activated, enables the coolant to be delivered to the adsorbed natural gas tank (2) in order to heat the adsorbed natural gas tank (2) with the temperature of the engine (M).

When the engine (M) is operated when the adsorbed natural gas tank (2) is not active, the coolant travels within the water line (61) and sends out the heat it receives from the engine (M) by means of the radiator (62). When the natural gas system is activated, the adsorbed natural gas tank (2) is required to be heated. The three-way valve (63) sends the coolant which leaves the engine (M) to the adsorbed natural gas tank (2) without sending it to the radiator (62) thereby enabling to heat the adsorbed natural gas tank (2) by means of a part of the heat of the engine (M). Temperatures of the adsorbed natural gas tank (2) and the water circuit (6) are controlled via the sensors. When the sensors detect that predetermined temperature values are reached, the control unit (7) adjusts temperature of the adsorbed natural gas tank (2) by controlling the three way valve (63). In a preferred embodiment of the invention, engine (M) heat and cabin temperature can be controlled by incorporating the vehicle air conditioning system (64) to the water circuit (6).

In a preferred embodiment of the invention, the adsorbed natural gas tank (2) can be used together with the compressed natural gas tank (8). The compressed natural gas tank (8) works together with the adsorbed natural gas tank (2) in the natural gas filling circuit (4) and natural gas usage circuit (5).

## Claims

1. An adsorbed natural gas system (1), which aims to store, fill and use natural gas for natural-gas-driven-systems in motor vehicles, **and comprising,**
- at least one adsorbed natural gas tank (2) wherein the natural gas is stored,
- at least one natural gas vacuum circuit (3) which enables to discharge the natural gas from the adsorbed natural gas storage (2),
- at least one natural gas filling circuit (4) which enables to fill natural gas into the adsorbed natural gas tank (2),
- at least one natural gas usage circuit (5) which enables the natural gas to be delivered from the adsorbed natural gas tank (2) to the engine in order to be used,
- at least one water circuit (6) which enables to control temperature of the adsorbed natural gas tank (2) during usage and comprises;
• at least one water line (61) through which the engine coolant travels,
• at least one radiator (62) through which the coolant heated by the engine's (M) temperature discharges the heat out of the vehicle,
• at least one three way valve (63) which, when the adsorbed natural gas tank (2) is activated, enables the coolant to be delivered to the adsorbed natural gas tank (2) in order to heat the adsorbed natural gas tank (2) with the temperature of the engine (M),
- sensors which control temperatures of the adsorbed natural gas tank (2) and the water circuit (6),
- at least one control unit (7) which controls the operations of the system via the information received from the sensors and controls the concerned three way valve (63) such that when the sensors detect that predetermined temperature values are reached, the control unit (7) adjusts temperature of the adsorbed natural gas tank (2) by controlling the three way valve (63).

2. An adsorbed natural gas system (1), according to Claim 1, **characterized by** the adsorbed natural gas tank (2) which is in the form of a tank that stores natural gas by means of the porous materials provided therein.

3. An adsorbed natural gas system (1), according to Claim 1, **characterized by** the natural gas vacuum circuit (3) which enables to empty the adsorbed natural gas tank (2) by vacuum operation prior to natural gas filling operation, and comprises
- at least one vacuum line (31) through which the natural gas is vacuumed from the adsorbed natural gas tank (2),
- a vacuum valve (32) which controls passage of the natural gas through the vacuum line (31),
- at least one vacuum opening (33) which enables connection of the vacuum line (31) to the vacuum pump.

4. An adsorbed natural gas system (1), according to Claim 1, **characterized by** the natural gas filling circuit (4) which carries out the natural gas filling operation for the adsorbed natural gas tank (2), and comprises
- at least one filling line (41) through which the natural gas is delivered to the adsorbed natural gas tank (2),
- a filling valve (42) which controls passage of the natural gas through the filling line (41),
- at least one filling opening (43) which enables connection of the filling line (41) to the natural gas station,
- a regulator (44) which adjusts the pressure of the natural gas received from the natural gas station to a pressure suitable to the adsorbed natural gas tank (2).

5. An adsorbed natural gas system (1), according to Claim 1, **characterized by** the natural gas usage circuit (5) which enables the stored natural gas to be delivered to the engine in order to be used as fuel and comprises
- at least one ANG line (51) through which the natural gas is delivered from the adsorbed natural gas tank (2) to the engine,
- a usage valve (52) which controls passage of the natural gas through the ANG line (51).

## Patentansprüche

1. Adsorbiertes Erdgassystem (1), welches darauf abzielt, Erdgas für Erdgasbetriebene Systeme in Kraftfahrzeugen zu speichern, zu füllen und zu nutzen, und **umfassend,**
- mindestens einen adsorbierten Erdgastank (2), wobei das Erdgas gespeichert wird,
- mindestens einen Erdgas-Vakuumkreislauf (3), der die Abführung des Erdgases aus dem adsorbierten Erdgasspeicher (2) ermöglicht,
- mindestens einen Erdgas-Füllkreislauf (4), der das Füllen von Erdgas in den adsorbierten Erdgastank (2) ermöglicht,
- mindestens einen Erdgas-Nutzungskreislauf (5), der es ermöglicht, das Erdgas aus dem adsorbierten Erdgastank (2) der Maschine zuzuführen, um es zu nutzen,
- mindestens einen Wasserkreislauf (6), der es ermöglicht, die Temperatur des adsorbierten Erdgastanks (2) während des Nutzens zu steuern und umfasst;
• mindestens eine Wasserlinie (61), durch die das Maschinenkühlmittel läuft,
• mindestens einen Heizkörper (62), durch den das durch die Maschinentemperatur (M) erwärmte Kühlmittel die Wärme aus dem Fahrzeug abführt,
• mindestens ein Dreiwegeventil (63), das bei Aktivierung des adsorbierten Erdgastanks (2) ermöglicht, dass das Kühlmittel dem adsorbierten Erdgastank (2) zugeführt wird, um den adsorbierten Erdgastank (2) mit der Maschinentemperatur (M) zu erwärmen,
• Sensoren, die die Temperaturen des adsorbierten Erdgastanks (2) und des Wasserkreislaufs (6) kontrollieren,
- mindestens eine Steuereinheit (7), die den Betrieb des Systems über die von den Sensoren erhaltenen Informationen steuert und das zugehörige Dreiwegeventil (63) derart steuert, dass wenn die Sensoren feststellen, dass vorbestimmte Temperaturwerte erreicht werden, die Steuereinheit (7) die Temperatur des adsorbierten Erdgastanks (2) durch Steuerung des Dreiwegeventils (63) einstellt.

2. Adsorbiertes Erdgassystem (1) nach Anspruch 1, **gekennzeichnet durch** den adsorbierten Erdgastank (2), der in die Form eines Tanks ist, der Erdgas mittels der darin vorgesehenen porösen Materialien speichert.

3. Adsorbiertes Erdgassystem (1) nach Anspruch 1, **gekennzeichnet durch** den Erdgas-Vakuumkreislauf (3), der die Entleerung des adsorbierten Erdgastanks (2) durch Vakuumbetrieb vor dem Füllvorgang des Erdgases ermöglicht und umfasst
- mindestens eine Vakuumlinie (31), durch die das Erdgas aus dem adsorbierten Erdgastank (2) vakuumiert wird,
- ein Vakuumventil (32), das den Durchgang des Erdgases durch die Vakuumlinie (31) steuert,
- mindestens eine Vakuumöffnung (33), die den Verbindung der Vakuumlinie (31) mit der Vakuumpumpe ermöglicht.

4. Adsorbiertes Erdgassystem (1) nach Anspruch 1, **gekennzeichnet durch** den Erdgas-Füllkreislauf (4), der den Erdgas-Füllvorgang für den adsorbierten Erdgastank (2) durchführt, und umfasst
- mindestens eine Fülllinie (41), durch die das Erdgas in den Tank (2) für das adsorbierte Erdgas zugeführt wird,
- ein Füllventil (42), das den Durchgang des Erdgases durch die Fülllinie (41) steuert,
- mindestens eine Füllöffnung (43), die den Verbindung der Fülllinie (41) mit der Erdgasstation ermöglicht,
- einen Regler (44), der den Druck des von der Erdgasstation erhaltenen Erdgases auf einen für den adsorbierten Erdgastank (2) geeigneten Druck einstellt.

5. Adsorbiertes Erdgassystem (1) nach Anspruch 1, **gekennzeichnet durch** den Erdgas-Nutzungskreislauf (5), der es ermöglicht, das gespeicherte Erdgas an die Maschine zuzuführen, um es als Brennstoff zu nutzen, und umfasst
- mindestens eine ANG-Linie (51), durch die das Erdgas aus dem adsorbierten Erdgastank (2) zur Maschine zugeführt wird,
- ein Nutzungsventil (52), das den Durchgang des Erdgases durch die ANG-Linie (51) steuert.

## Revendications

1. Système de gaz naturel adsorbé (1), qui vise à stocker, remplir et utiliser le gaz naturel pour les systèmes au gaz naturel dans les véhicules à moteur, **et comprenant**
- au moins un réservoir de gaz naturel adsorbé (2) dans lequel le gaz naturel est stocké,
- au moins un circuit à vide de gaz naturel (3) qui permet d'évacuer le gaz naturel du stockage de gaz naturel adsorbé (2),
- au moins un circuit de remplissage de gaz naturel (4) qui permet de remplir de gaz naturel le réservoir de gaz naturel adsorbé (2),
- au moins un circuit d'utilisation du gaz naturel (5) qui permet d'acheminer le gaz naturel du réservoir de gaz naturel adsorbé (2) vers le moteur afin de l'utiliser,
- au moins un circuit d'eau (6) qui permet de contrôler la température du réservoir de gaz naturel adsorbé (2) pendant l'utilisation et comprend
• au moins une conduite d'eau (61) par laquelle circule le réfrigérant du moteur,
• au moins un radiateur (62) par lequel le réfrigérant chauffé par la température du moteur (M) évacue la chaleur hors du véhicule,
• au moins une vanne à trois voies (63) qui, lorsque le réservoir de gaz naturel adsorbé (2) est activé, permet d'acheminer le réfrigérant vers le réservoir de gaz naturel adsorbé (2) afin de chauffer le gaz naturel adsorbé (2) avec la température du moteur (M), des capteurs qui contrôlent les températures du réservoir de gaz naturel adsorbé (2) et du circuit d'eau (6),
- au moins une unité de contrôle (7) qui contrôle les opérations du système par le biais des informations reçues des capteurs et qui contrôle la vanne à trois voies concernée (63) de sorte que lorsque les capteurs détectent que des valeurs de température prédéterminées sont atteintes, l'unité de contrôle (7) ajuste la température du réservoir de gaz naturel adsorbé (2) en contrôlant la vanne à trois voies (63).

2. Système de gaz naturel adsorbé (1) selon la revendication 1, **caractérisé par** le réservoir de gaz naturel adsorbé (2) qui se présente sous la forme d'un réservoir qui stocke le gaz naturel au moyen des matériaux poreux qui y sont fournis.

3. Système de gaz naturel adsorbé (1) selon la revendication 1, **caractérisé par** le circuit à vide de gaz naturel (3) qui permet de vider le réservoir de gaz naturel adsorbé (2) par une opération de vide avant l'opération de remplissage de gaz naturel, et comprend
- au moins une conduite à vide (31) par laquelle le gaz naturel est aspiré du réservoir de gaz naturel adsorbé (2),
- une vanne à vide (32) qui contrôle le passage du gaz naturel dans la conduite à vide (31),
- au moins une ouverture de vide (33) qui permet de raccorder la conduite à vide (31) à la pompe à vide.

4. Système de gaz naturel adsorbé (1) selon la revendication 1, **caractérisé par** le circuit de remplissage de gaz naturel (4) qui effectue l'opération de remplissage de gaz naturel pour le réservoir de gaz naturel adsorbé (2), et comprend
- au moins une conduite de remplissage (41) par laquelle le gaz naturel est acheminé vers le réservoir de gaz naturel adsorbé (2),
- une vanne de remplissage (42) qui contrôle le passage du gaz naturel dans la conduite de remplissage (41),
- au moins une ouverture de remplissage (43) qui permet le raccordement de la conduite de remplissage (41) à la station de gaz naturel,
- un régulateur (44) qui ajuste la pression du gaz naturel reçu de la station de gaz naturel à une pression adaptée au réservoir de gaz naturel adsorbé (2).

5. Système de gaz naturel adsorbé (1) selon la revendication 1, **caractérisé par** le circuit d'utilisation du gaz naturel (5) qui permet de livrer le gaz naturel stocké au moteur afin qu'il soit utilisé comme carburant et comprend
- au moins une conduite ANG (51) par laquelle le gaz naturel est acheminé du réservoir de gaz naturel adsorbé (2) vers le moteur,
- une vanne d'utilisation (52) qui contrôle le passage du gaz naturel dans la conduite ANG (51).
